Europäisches Patentamt

European Patent Office

Office européen des brevets

(11) Veröffentlichungsnummer: **0 499 107 A1**

(12) **EUROPÄISCHE PATENTANMELDUNG**

(21) Anmeldenummer: **92101675.4**

(22) Anmeldetag: **01.02.92**

(30) Priorität: **12.02.91 DE 4104182**

(43) Veröffentlichungstag der Anmeldung:
**19.08.92 Patentblatt 92/34**

(84) Benannte Vertragsstaaten:
**AT CH DE FR IT LI**

(51) Int. Cl.⁵: **A47J 31/22**

(71) Anmelder: **SCHINDLER, Claude**
**14, rue du Conseil Général**
**CH-1205 Genève(CH)**

(72) Erfinder: **SCHINDLER, Claude**
**14, rue du Conseil Général**
**CH-1205 Genève(CH)**

(74) Vertreter: **Dietlin, Henri**
**Dietlin & Cie S.A. Rue des Epinettes 19**
**CH-1227 Genève(CH)**

(54) Maschine zur Zubereitung von Aufgüssen, insbesondere von Kaffee.

(57) Die Erfindung betrifft eine Maschine zur Zubereitung von Aufgüssen, insbesondere von Kaffee mit einem rotierenden Hohlkörper (10), durch den der zu extrahierende Stoff und das Brühwasser durch Fliehkraft verdichtet bzw. nach außen befördert werden. Wesentlich ist, daß der Hohlkörper hierzu zahlreiche Kanäle (16) aufweist, die nicht radial nach außen, sondern bezogen auf die Drehrichtung des Hohlkörpers gleichsinnig nach hinten laufen.

Fig. 1

EP 0 499 107 A1

Die Erfindung betrifft eine Maschine zur Zubereitung von Aufgüssen, insbesondere von Kaffee mit einem Motor, der einen Hohlkörper in Rotation um seine vertikale Achse antreibt, mit einer in dem Hohlkörper angeordneten zentralen Aushöhlung, in die der zu extrahierende Stoff, im allgemeinen Kaffeepulver, und das Brühwasser einleitbar sind und von deren Umfang zahlreiche Kanäle nach außen laufen, in denen der zu extrahierende Stoff durch Fliehkraft komprimiert wird, und mit einem vertikal verfahrbaren Abdeckelement, das in seiner einen Hubposition die genannten Kanäle an ihrem äußeren Ende unter Freilassung eines für den Durchfluß des Aufgusses ausreichenden, jedoch den zu extrahierenden Stoff in den Kanälen zurückhaltenden Spaltes abdeckt, wogegen die Kanäle in einer anderen Hubposition des Abdeckelementes für den Auswurf des verbrauchten Stoffes freigegeben werden.

Eine derartige Maschine ist in dem französischen Patent 1 393 523 und in der korrespondierenden deutschen Patentanmeldung 1 429 852 beschrieben. Dabei sind die Kanäle jeweils paarweise aus zwei sich schneidenden Teilkanälen gebildet, derart, daß zwei getrennte Kanaleingänge sich zu einem gemeinsamen Kanalausgang verjüngen. Dadurch soll eine gute Verteilung des zu extrahierenden Stoffes auf die einzelnen Kanäle gewährleistet sein und zugleich eine dichtere Packung des Stoffes in den Kanälen.

Der vorliegenden Erfindung liegt die Aufgabe zugrunde, die bekannte Maschine dahingehend weiterzuentwickeln, daß die Qualität des Aufgusses wesentlich verbessert wird. Zugleich soll auch die Kapazität der Maschine bezogen auf den Platzbedarf des Hohlkörpers erhöht werden.

Die Erfindung geht dabei von der Erkenntnis aus, daß bei dem bekannten System der zu extrahierende Stoff aufgrund seiner Massenträgheit je nach Drehrichtung des Rotors gegen die eine oder die andere Kanalwand gedrückt wird und daß dadurch die erwünschte Verdichtung des Kaffee am Ende der Kanäle wie auch der spätere Auswurf des verbrauchten Stoffes beeinträchtigt wird.

Diesem Mangel wird erfindungsgemäß dadurch abgeholfen, daß die Kanäle von innen nach außen bezogen auf die Drehrichtung des Hohlkörpers gleichsinnig nach hinten laufen. Die bisherige Kombination zweier jeweils symmetrisch angeordneter Kanäle wird also ersetzt durch einheitlich nach hinten laufende Kanäle. Dadurch ergibt sich der Vorteil, daß alle Kanäle gleichwertig durchströmt werden und daß insbesondere der Einfluß der mit dem Radius zunehmenden Umfangsgeschwindigkeit der Kanäle und ihre daraus resultierende Beaufschlagung in Umfangsrichtung durch die Stoffteilchen, die bestrebt sind ihre Umfangsgeschwindigkeit beizubehalten, verringert wird.

Außerdem können durch die erfindungsgemäße Anordnung mehr Kanäle in dem rotierenden Hohlkörper untergebracht werden, so daß sich seine Kapazität erhöht.

Besonders günstig ist es, wenn die Kanäle in dem Maß nach hinten laufen, daß bei einer gewünschten Drehzahl des Hohlkörpers der zu extrahierende Stoff beim Durchströmen der Kanäle von innen nach außen zumindest annähernd seine Umfangsgeschwindigkeit beibehalten kann. Die Kanäle folgen also der Bahnkurve der zu extrahierenden Stoffteilchen bei ihrer Zentrifugalbewegung. Dadurch ist sichergestellt, daß die Teilchen nicht mehr an die Kanalwand angedrückt werden, sondern nahezu reibungsfrei bis an das Kanalende gelangen, wo sie mit hoher Geschwindigkeit aufprallen und optimal verdichtet werden.

Weitere Merkmale und Vorteile der Erfindung ergeben sich aus den Unteransprüchen und aus der nachfolgenden Beschreibung eines Ausführungsbeispieles anhand der Zeichnung; dabei zeigt

Fig. 1 eine Seitenansicht einer Kaffeemaschine, wobei die linke Bildhälfte axial geschnitten ist;

Fig. 2 eine Draufsicht auf den Hohlkörper ohne Abdeckelement;

Fig. 3 einen Schnitt längs der Linie III-III von Fig. 2 und

Fig. 4 einen Schnitt längs der Linie IV-IV von Fig. 2.

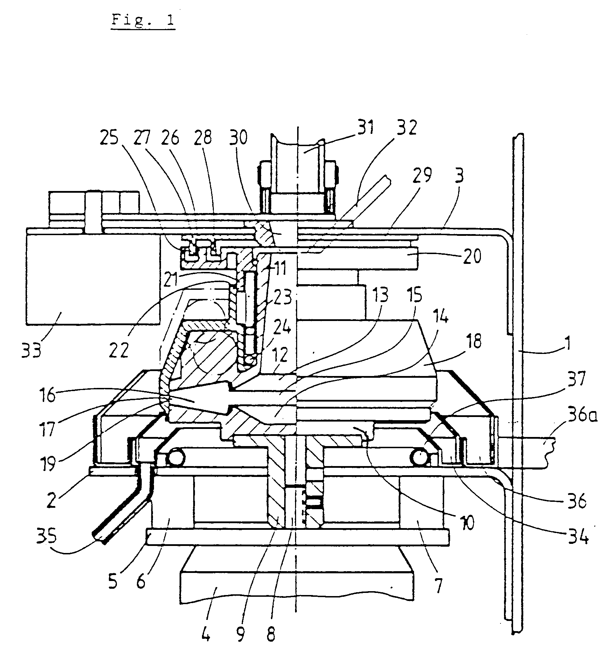

Die erfindungsgemäße Kaffeemaschine gemäß Fig. 1 weist ein teilweise dargestelltes Gestell 1 mit zwei Konsolen 2 und 3 auf. Die Konsole 2 trägt einen Elektromotor 4 mit vertikaler Drehachse, der über einen Motorflansch 5 über elastische Dämpfungselemente 6 und 7 an der Unterseite der Konsole 2 montiert ist. An der nach oben vorstehenden Welle 8 des Motors ist eine Hülse 9 montiert, die ihrerseits einen Rotor 10 trägt, der als Hohlkörper ausgebildet ist und eine sich nach oben erstreckende, rohrförmige Nabe 11 aufweist. Das innere dieser Nabe läuft nach unten konisch auseinander und mündet an seinem unteren Ende in eine Aushöhlung 12, die sich radial erweitert und von einer oberen und einer unteren kegelstumpfförmigen Wandung 13 bzw. 14 begrenzt wird. Die genannten Wandungen laufen nach außen bis zu einem Umfangsschlitz 15 zusammen und von diesem Umfangsschlitz erstrecken sich zahlreiche Kanäle 16 nach außen. Diese Kanäle weisen hinter dem Umfangsspalt 15 zunächst einen größeren Querschnitt auf als es der Spalthöhe entspricht, verjüngen sich dann nach außen, bis sie jeweils in Öffnungen 17 am zylindrischen Außenumfang des Hohlkörpers 10 enden.

Der Hohlkörper 10 trägt oberhalb ein Abdeckelement in Form einer Glocke 18. Ihre zylindrische Innenwand 19 umgibt den Rotor und deckt in ihrer unteren Position die Öffnungen 17 mit einem sehr geringen Spiel ab, so daß lediglich der flüssige Aufguß herausfließen kann, wogegen das Kaffeepulver in dem rotierenden Hohlkörper gefangen bleibt. Das Spiel zwischen der Glocke 18 und dem Hohlkörper 10 hat also praktisch die Funktion eines Filters.

Auf der Nabe 11 ist nahe ihrem oberen Ende eine Krone 20 angeordnet, deren zylindrischer Ansatz 21 sich frei, aber ohne Spiel in einen zylindrischen Kragen 22 der Glocke 18 hineinerstreckt und der zur Führung dieser Glocke dient. Zwischen der Krone 20 und der Innenseite der Glocke 18 ist eine Druckfeder 23 angeordnet. Das untere Ende der Druckfeder 23 ist über ein Kugellager 24 drehbar auf der Glocke gelagert, damit die Glocke 18 relativ zur Druckfeder 23 rotieren kann, wenn das verbrauchte Kaffeepulver ausgeworfen werden soll, was später noch beschrieben wird.

Die Krone 20 dient außerdem zur Bildung einer Labyrinthdichtung. Zu diesem Zweck weist sie an ihrer Oberseite zwei kreisförmige Rinnen 25 und 26 auf, in welche zwei passende ringförmige, konzentrische Vorsprünge 27 und 28 von oben eindringen, die ihrerseits an einer mit der Konsole 3 verbundenen Platte 29 angeordnet sind. Die so geformte Labyrinthdichtung fungiert als Luftsperre gegenüber dem Inneren des Hohlkörpers 10, damit keine kalte Außenluft durch die Fliehkraftwirkung des rotierenden Hohlkörpers eingesaugt wird und den Aufguß abkühlt. Die beschriebene Labyrinthdichtung hat außerdem den Vorteil, daß sie ein erhebliches Radialspiel zuläßt. Dadurch kann der Hohlkörper mit seiner Glocke radiale Vibrationen durchführen, wie sie aufgrund der elastischen Montage über die Dämpfungselemente 6 und 7 auftreten, wenn die Maschine mit hoher Drehzahl läuft.

Die Konsole 3 weist außerdem eine konische Öffnung 30 zum Einfüllen des Kaffeepulvers auf. Im Ausführungsbeispiel ist hierzu eine automatische Füllvorrichtung 31 vorgesehen, die das Kaffeepulver in der gewünschten Menge zugibt. Ebenso automatisch wird das heiße Wasser in an sich bekannter Weise durch eine Leitung 32 am oberen Ende der Nabe 11 zugeführt.

Schließlich trägt die Konsole 3 noch einen Elektromagnet, der eine Klappe zum Verschluß der Öffnung 30 betätigt.

Die untere Konsole 2 weist einen ersten ringförmigen, innen liegenden Kanal 34 auf, in dem sich der flüssige Aufguß sammelt und schließlich über eine Leitung 35 abfließt. Außerhalb dieses Kanals 34 befindet sich ein zweiter Kanal 36 für die Aufnahme des verbrauchten Kaffeepulvers, das durch Spülen und durch die Zentrifugalkraft über eine tangentiale Leitung 36a abgeführt wird. Unterhalb des Hohlkörpers 10 ist schließlich noch ein Heizkörper 37 eingebaut, damit das in den Hohlkörper eingefüllte heiße Wasser auf Brühtemperatur gehalten wird.

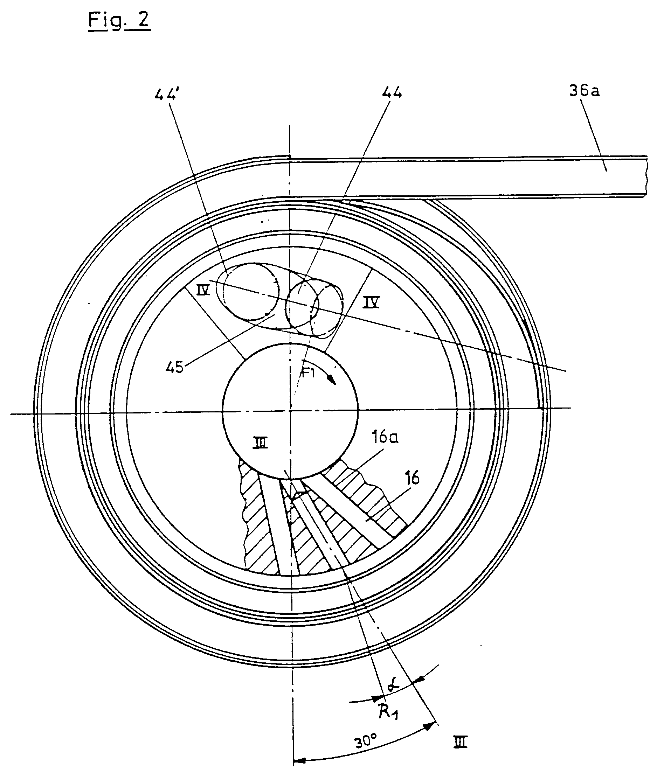

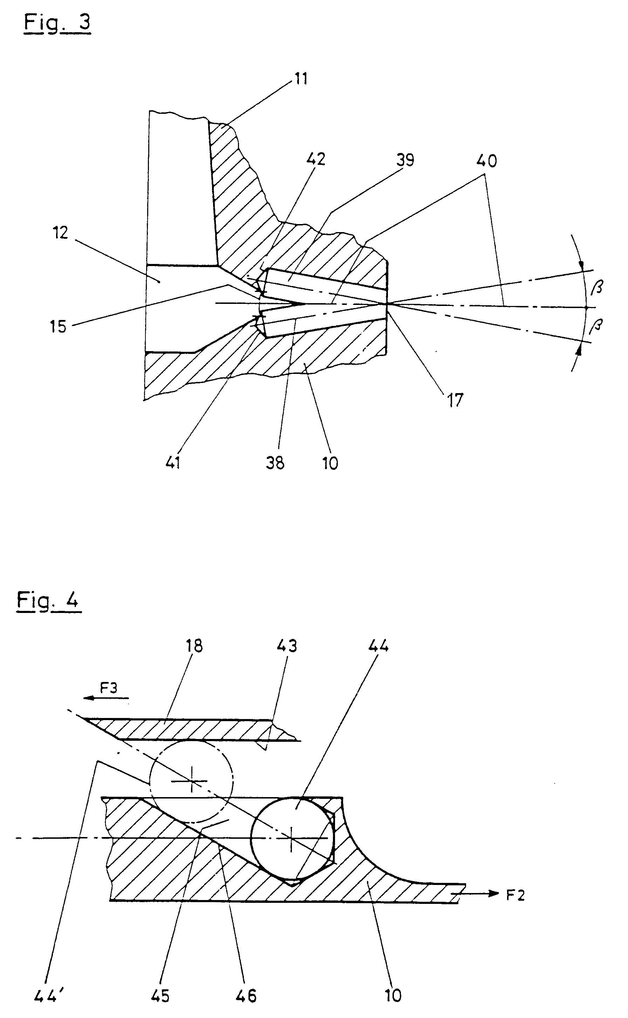

Die Form und Lage der Kanäle 16 geht aus den Fig. 2 und 3 hervor. In der Draufsicht gemäß Fig. 2 sind die Kanäle 16 allesamt gleichsinnig bezogen auf die Drehrichtung schräg nach hinten orientiert und weisen eine konstante Länge auf. Die Ausrichtung der Kanäle ist so gewählt, daß sich gegenüber einem Radialstrahl $R_1$ durch die äußere Öffnung 17 des Kanales unter einem Winkel $\alpha$ von etwa 10° bis 20°, insbesondere etwa 11° verlaufen. Anstelle des gezeigten geradlinigen Verlaufes der Kanäle ist auch ein leichter gekrümmter Verlauf möglich, insbesondere, wenn sich das Kaffeepulver nicht mit gleichbleibender Geschwindigkeit nach außen bewegt. Grundsätzlich soll der Verlauf der Kanäle aber, wie gesagt, so gewählt sein, daß das Kaffeepulver beim Durchströmen der Kanäle praktisch keine zusätzliche Geschwindigkeitskomponente in Umfangsrichtung erhält, sondern soweit wie möglich reibungsfrei bis an das Kanalende gelangt. Zu diesem Zweck muß die Kanalwand 16a auf jeden Fall unter einem erheblichen Winkel gegenüber einem Radialstrahl nach hinten weglaufen, damit die Winkelgeschwindigkeit der Kaffeeteilchen, die bei ihrer Strömung von innen nach außen laufend abnimmt, nicht zu einem Anstoßen der Kaffeeteilchen an der mit konstanter Winkelgeschwindigkeit umlaufenden Kanalwand führt. Dadurch ist ein Anbacken das Kaffeepulvers an den Kanalwänden wieitgehend ausgeschlossen und eine hohe Verdichtung gewährleistet.

Darüber hinaus zeigt Fig. 2, daß die Kanäle aufgrund ihrer gleichsinnigen Ausrichtung sehr dicht aufeinanderfolgen können und demzufolge die Kapazität der Maschine wesentlich höher ist als im bekannten Fall. Dies hat seine Ursache auch darin, daß die Verjüngung der Kanäle von innen nach außen nicht in einer Horizontalebene, sondern in einer Vertikalebene erfolgt, wie dies in Fig. 3 dargestellt ist. Man sieht dort, daß jeder Kanal aus zwei sich schneidenden Bohrungen 38 und 39 gebildet ist, die gegenüber einer Horizontalebene 40 schräg nach oben bzw. schräg nach unten in Richtung zu der Aushöhlung 12 laufen. Sie enden als Sacklöcher, sind aber an ihren einander zugewandten Umfangsflächen offen zueinander, so daß am Übergang zu der Aushöhlung 12 ein relativ großer Kanalquerschnitt zur Verfügung steht, der sich zur Öffnung 17 hin drastisch verringert und dadurch die Kompression des Kaffeepulvers erheblich verstärkt. Die Schrägstellung der die Kanäle 16 bildenden Bohrungen 38 und 39 gegenüber der Horizontalebene 40 beträgt jeweils etwa 10°.

Der Auswurf des verbrauchten Kaffeepulvers erfolgt in an sich bekannter Weise, indem der Hohlkörper 10 gegenüber der für die Kaffeebereitung gültigen Drehzahl auf eine höhere Drehzahl beschleunigt wird. Dabei fährt das glokkenförmige Abdeckelement 18 nach oben in die in Fig. 1 strichpunktierte Stellung, gibt die Öffnungen 17 der Kanäle 16 völlig frei, so daß das verbrauchte Kaffeepulver durch Fliehkraft und gegebenenfalls durch Nachspülen in den äußeren Ringraum 36 fällt. Im vorliegenden Fall wird jedoch die Glocke 18 nicht durch Zentrifugalkraft, sondern durch Trägheitskraft angehoben. Zu diesem Zweck wird die Glocke 18 im Ruhezustand und bei einer ersten Drehzahl, die für die Kaffeebereitung gilt, durch ihr Eigengewicht und durch die Druckfeder 23 nach unten gedrückt wie in Fig. 1 dargestellt. Dabei liegt die Glocke mit ihrer Unterseite 43 (vgl. Fig. 4) auf Kugeln 44, die beispielsweise in drei Ausnehmungen 45 verteilt über den Umfang der Oberseite des Rotors 10 gelagert sind. Die Ausnehmungen 45 verlaufen annähernd in Umfangsrichtung, steigen aber schräg nach oben an, so daß jede Kugel 44 entlang einer Rampe 46 hoch rollen kann.

Wird nun der Hohlkörper 10 abrupt beschleunigt, beispielsweise von 4000 Umdrehungen/Minute auf 6000 Umdrehungen/Minute, so hat die Glocke 18 aufgrund ihrer Trägheit die Tendenz, ihre ursprüngliche Geschwindigkeit beizubehalten. Es kommt dadurch zu einer Relativdrehung der Glocke 18 relativ zum Hohlkörper 10. Die Glocke 18 nimmt dabei die Kugeln 44 - noch begünstigt durch deren Massenträgheit - mit, wobei die Kugeln entlang den Rampen 46 hoch rollen und die Glocke anheben. Diese Hubbewegung wird begrenzt durch die Krone 20, gegen die die Glocke mit ihrem oberen Rand 22 anstößt. In dieser Position sind die Öffnungen 17 komplett frei und das verbrauchte Kaffeepulver wird herausgeschleudert. Die Kugeln 44 werden dabei durch die schräg verlaufende Mantelfläche der Glocke gesichert, wie dies strichpunktiert in Fig. 1 erkennbar ist. Damit das Hochfahren der Glocke und der Kugeln leicht vonstatten geht, erhalten die Kugeln 44 eine kleine Zentrifugalkraft-Komponente, indem die Rinnen 45 mit den Rampen 46 unter leichter Vergrößerung des Achsabstandes vom Rotor hoch laufen. Im Ausführungsbeispiel bildet die Rampe 46 etwa einen rechten Winkel mit einem Radialstrahl durch das untere Ende der Rampe.

Zusammenfassend ergibt sich also folgende Funktion: Der zu extrahierende Stoff, insbesondere Kaffeepulver, wird in die Aushöhlung 12 des Hohlkörpers 10 eingeschüttet, wobei der Hohlkörper 10 mit einer ersten Drehzahl von beispielsweise 4000 Umdrehungen/Minute umläuft. Das Kaffeepulver wird dann durch Zentrifugalkraft durch den Spalt 15 hindurch in die Kanäle 16 geschleudert, deren Öffnungen 17 durch die Glocke 18 abgedeckt sind. Aufgrund der Fliehkraftwirkung und den nach außen sich verjüngenden Kanälen kommt es zu einer Verdichtung des Kaffeepulvers in den Kanälen. Anschließend wird kochendes Wasser durch die Leitung 32 zugegeben und dieses Wasser wird ebenfalls durch Zentrifugalkraft in die Kanäle 16 geschleudert, weil es aufgrund der kegelstumpfförmigen Ausgestaltung an der Innenseite der Nabe 11 am Hochsteigen gehindert wird. Nachdem das Wasser die Kanäle mit dem Kaffeepulver durchquert hat, fließt es als Kaffee-Aufguß durch den Spalt zwischen Hohlkörper 10 und Glocke 18 nach unten zu der Leitung 35, die üblicherweise zwei Ausgänge zum gleichzeitigen Füllen von Zwei Tassen aufweist. Sodann wird der Hohlkörper 10 auf eine zweite höhere Drehzahl, beispielsweise 6000 Umdrehungen/Minute beschleunigt. Dadurch hebt sich die Glocke 18 aufgrund ihrer Trägheitskräfte wie zuvor beschrieben und gibt die Öffnungen 17 frei, so daß das verbrauchte Kaffeepulver unterstützt durch dem Hohlkörper zugeführtes Spülwasser herausgeworfen wird. Die Maschine ist dann bereit zur Aufnahme einer neuen Dosis Kaffeepulver.

Die Maschine kann gleichermaßen für eine oder für zwei Tassen Kaffee verwendet werden. Soll nur eine Tasse Kaffee gemacht werden, so füllt sich nur die äußere Hälfte der Kanäle 16. In diesem Fall ist die Kompressionswirkung der Zentrifuge maximal. Für zwei Tassen Kaffee werden die Kanäle ganz gefüllt und das Aufquellen des Kaffeepulvers bei der Wasserzugabe erzeugt eine Selbstkompression an den Böden 41 und 42 der Bohrungen 38 und 39.

Um das Hochfahren der Glocke durch die Trägheitskraft sicherzustellen, können verschiedene Rampensysteme verwendet werden. Diese Rampen können entweder in der Glocke oder auf dem rotierenden Hohlkörper wie auch auf beiden Teilen gemeinsam vorgesehen werden. Kugeln oder andere Gleitstücke werden normalerweise eingesetzt, um die Reibung zu vermindern, aber es ist auch möglich, synthetische, selbstschmierende Gleitflächen zu verwenden und auf separate Rollkörper zu verzichten.

Stattdessen kann die Glocke aber auch unter Verzicht auf das beschriebene Rampensystem angehoben werden, insbesondere durch einen Elektromagnet, der beispielsweise eine zentral den Rotor durchquerende Stange mit der Glocke hochhebt.

Des weiteren besteht die Möglichkeit, daß die Kanäle nicht jeweils aus zwei sich schneidenden Bohrungen 38 und 39 hergestellt werden, wie in Fig. 3 dargestellt, sondern daß sie mehr oder weniger geradlinig durch den Hohlkörper 11 hindurchgehen.

Schließlich liegt es auch im Rahmen der Erfindung, auf ein separates Abdeckelement 18 zu verzichten und stattdessen den Hohlkörper 10 etwa längs einer horizontalen Ebene durch die Enden der Kanäle 16 in zwei Teilstücke zu unterteilen, wobei das eine Teilstück als vertikal verfahrbares Abdeckelement fungiert. Während des Aufgusses werden die beiden Teilstücke also zusammengefahren, daß nur ein kleiner Ringspalt außen frei bleibt, wogegen die Teilstücke für den Auswurf des verbrauchten Stoffes voneinander distanziert werden. In diesem Fall fungieren also die genannten Teilstücke des Hohlkörpers 10 oder zumindest eines dieser Teilstücke selbst als Abdeckelement zur Bildung eines engen Spaltes am äußeren Ende der Kanäle 16 bzw. zur Freigabe derselben.

**Patentansprüche**

1. Maschine zur Zubereitung von Aufgüssen, insbesondere von Kaffee mit einem Motor (4), der einen Hohlkörper (10), in Rotation um seine vertikale Achse antreibt, mit einer in dem Hohlkörper (10) angeordneten zentralen Aushöhlung (12), in die der zu extrahierende Stoff und das Brühwasser einleitbar sind und von deren Umfang zahlreiche Kanäle (16) nach außen laufen, in denen der zu extrahierende Stoff durch Fliehkraft komprimiert wird und mit einem etwa vertikal verfahrbaren Abdeckelement (18), das in seiner einen Hubposition die genannten Kanäle (16) an ihrem äußeren Ende unter Freilassung eines für den Durchfluß des Aufgusses ausreichenden, jedoch den zu extrahierenden Stoff in den Kanälen zurückhaltenden Spaltes verengt, wogegen die Kanäle in einer anderen Hubposition des Abdeckelementes (18) für den Auswurf des verbrauchten Stoffes freigegeben werden, dadurch gekennzeichnet, daß die Kanäle (16) von innen nach außen bezogen auf die Drehrichtung des Hohlkörpers (10) etwa gleichsinnig nach hinten laufen.

2. Maschine nach Anspruch 1, dadurch gekennzeichnet, daß die Kanäle (16) in dem Maß nach hinten laufen, daß bei einer gewünschten Drehzahl des Hohlkörpers (10) der zu extrahierende Stoff beim Durchströmen der Kanäle von innen nach außen zumindest annähernd seine Umfangsgeschwindigkeit beibehält.

3. Maschine nach Anspruch 1 oder 2, dadurch gekennzeichnet, daß die Kanäle (16) geradlinig oder gekrümmt unter einem Winkel von etwa 20° bis 40° gegenüber einem zum Kanalanfang gezogenen Radialstrahl nach hinten laufen.

4. Maschine nach einem der vorhergehenden Ansprüche, dadurch gekennzeichnet, daß die Kanäle (16) an ihrem innen liegenden Anfang, wo ihr Querschnitt am größten ist, über einen Spalt (15) mit reduziertem Querschnitt in Verbindung stehen mit der genannten zentralen Aushöhlung (12), derart, daß das innen liegende Ende der Kanäle jeweils den Spalt (15) umgebende Wandbereiche (41, 42) aufweist, die eine Selbstkompression des zu extrahierenden Stoffes herbeiführen.

5. Maschine, insbesondere nach einem der vorhergehenden Ansprüche, dadurch gekennzeichnet, daß jeder Kanal (16) sich von innen nach außen verjüngt und daß sich diese Verjüngung nur in der Vertikalebene des Kanales vollzieht.

6. Maschinen nach einem der vorhergehenden Ansprüche, dadurch gekennzeichnet, daß jeder Kanal (16) durch zwei sich in einer vertikalen Ebene schneidende Bohrungen (38, 39) gebildet ist, wobei diese Bohrungen zu der Aushöhlung (12) hin auseinanderlaufen.

7. Maschine nach einem der vorhergehenden Ansprüche, dadurch gekennzeichnet, daß das Abdeckelement (18) glockenförmig ausgebildet ist und den Hohlkörper (10) übergreift und daß es bei einer ersten Rotationsgeschwindigkeit die Kanäle (16) an ihrem äußerem Ende abdeckt, wogegen es bei einer zweiten, höheren Rotationsgeschwindigkeit über Rampen (46), die annähernd tangential am Hohlkörper (10) oder dem Abdeckelement (18) angeordnet sind, vertikal in eine die Kanäle freigebende Hubposition verfahren wird, indem sich das Abdeckelement (18) aufgrund seiner Trägheitskraft entlang den Rampen (46) verschiebt.

8. Maschine nach Anspruch 7, dadurch gekennzeichnet, daß die Rampen (46) an dem Hohlkörper (10) in Form schräger Rinnen (45) angeordnet sind, wobei in jeder Rampe eine Kugel (44) gelagert ist, auf der sich das Abdeckelement (18) mittels einer Druckfeder (23) abstützt und daß die Kugeln (44) von dem Abdeckelement (18) die Rampe aufwärtsrollend mitgenommen werden, wenn abrupt von der ersten auf die zweite Geschwindigkeit des Hohlkörpers beschleunigt wird.

9. Maschine nach Anspruch 8, dadurch gekennzeichnet,

daß die Richtung jeder Rampe (46) annähernd einen rechten Winkel mit einem Radialstrahl durch das untere Ende der Rampe bildet.

10. Maschine nach einem der vorhergehenden Ansprüche,
dadurch gekennzeichnet,
daß das Abdeckelement (18) durch eine Druckfeder (23) in die die Kanäle abdeckende Hubposition gedrückt wird und daß zwischen dem Abdeckelement und der Feder eine Kugellagerung (24) angeordnet ist.

11. Maschine nach einem der vorhergehenden Ansprüche,
dadurch gekennzeichnet,
daß sie eine Labyrinthdichtung zur Verhinderung des Lufteintrittes in die Aushöhlung (12) während dessen Rotation aufweist und daß diese Mittel durch zwei profilierte, gegenseitig mit Axial- und Radialspiel ineinander greifende Teile (20, 29) gebildet sind, wobei das eine dieser Teile mit dem Hohlkörper (10), das andere mit dem Gestell (1) verbunden ist.

12. Maschine nach einem der vorhergehenden Ansprüche,
dadurch gekennzeichnet,
daß sich an die Aushöhlung (12) eine nach oben offene rohrförmige Nabe (11) anschließt, die sich nach oben verjüngt.

13. Maschine nach Anspruch 1,
dadurch gekennzeichnet,
daß der Hohlkörper (10) etwa längs einer horizontalen Ebene in zwei Teilstücke unterteilt ist und mindestens das eine Teilstück als vertikal verfahrbares Abdeckelement fungiert.

14. Maschine nach Anspruch 1,
dadurch gekennzeichnet,
daß das Verfahren des Abdeckelementes (18) durch einen Hubmagneten erfolgt.

Fig. 1

## Fig. 2

Fig. 3

Fig. 4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| D,A | DE-A-1 429 852 (G.M. CHALANCON)<br>* Seite 4, Zeile 13 - Seite 5, Zeile 17; Abbildungen 2,4 *<br>--- | 1-10 | A 47 J 31/22 |
| A | DE-A-2 428 188 (S.L.L. CAILLIOT)<br>* Seite 7, Zeile 22 - Seite 14, Zeile 2; Ansprüche 3-7; Abbildungen 2,3 *<br>--- | 7-10 | |
| A | DE-A-2 458 518 (E. LAVAZZA)<br>* Seite 6, Zeile 5 - Seite 7, Zeile 6; Abbildung 5 *<br>--- | 13 | |
| A | DE-A-2 524 610 (M. MEYER)<br>* Seite 11, Zeilen 19-25; Abbildung *<br>--- | 4,14 | |
| A | FR-A-1 599 398 (R. GOUBLET)<br>* Seite 1, Zeilen 8-28; Abbildungen 1,3 *<br>--- | 1-3 | |
| A | CH-A- 420 511 (JURA ELEKTROAPPARATE-FABRIKEN L. HENZIROHS AG)<br>* Seite 1, Zeilen 50-56; Abbildung 1 *<br>----- | 11 | **RECHERCHIERTE SACHGEBIETE (Int. Cl.5)**<br><br>A 47 J |

Der vorliegende Recherchenbericht wurde für alle Patentansprüche erstellt

| Recherchenort | Abschlußdatum der Recherche | Prüfer |
|---|---|---|
| DEN HAAG | 11-05-1992 | SCHMITT J.W. |